Europäisches Patentamt

European Patent Office

Office européen des brevets

(11) Numéro de publication: **0 281 437**
**A1**

## (12) DEMANDE DE BREVET EUROPEEN

(21) Numéro de dépôt: 88400177.7

(22) Date de dépôt: 27.01.88

(51) Int. Cl.⁴: **G 09 B 29/00**
**A 61 J 7/00**

(30) Priorité: 13.02.87 FR 8701814

(43) Date de publication de la demande:
07.09.88 Bulletin 88/36

(84) Etats contractants désignés:
AT BE CH DE ES FR GB GR IT LI LU NL SE

(71) Demandeur: FOURNIER INNOVATION ET SYNERGIE
38, avenue Hoche
F-75008 Paris (FR)

(72) Inventeur: Maunand, Jean
6, clos de la Source Saint Philibert
F-21220 Gevrey Chambertin (FR)

(74) Mandataire: Cilsci, Serge et al
S.A. FEDIT-LORIOT CONSEILS EN PROPRIETE
INDUSTRIELLE 38, avenue Hoche
F-75008 Paris (FR)

(54) Calendrier posologique.

(57) La présente invention concerne un calendrier posologique comprenant au moins deux échelles (2, 3) de temps, une première échelle (2) ayant pour unité (21a, 21b ...) le jour dans le mois ou la semaine ou encore une fraction de jour dans le mois, la semaine ou le jour, et une seconde échelle (3) ayant un nombre d'éléments unitaires (31a, 31b ...) valant sept ou un multiple de sept qui est égal ou directement supérieur au nombre total de doses unitaires de médicament à administrer selon que celui-ci est divisible ou non par sept, une au moins des deux dites échelles comportant une marque de reconnaissance modifiable par l'utilisateur en cours de traitement.

FIG_1

EP 0 281 437 A1

## Description

### Calendrier posologique

La présente invention vise une aide à la réussite d'un traitement thérapeutique comprenant plusieurs prises dans le temps. Elle concerne plus précisément, en tant que produit industriel nouveau, un calendrier posologique permettant de confirmer la prise effective d'une spécialité pharmaceutique et de respecter dans le temps le traitement thérapeutique prescrit par le praticien.

On connaît des conditionnements de spécialités pharmaceutiques, suivant lesquels les alvéoles d'une plaquette obturées par une membrane ou pellicule déchirable par pression renferment chacune une dose unitaire de prise, essentiellement orale (un comprimé, une gélule ou une pilule), ou à la rigueur rectale ou vaginale (un suppositoire ou un ovule).

Parmi ces conditionnements dits "sous blister", on sait qu'il existe des plaquettes comportant des indications calendaires pour l'ensemble des alvéoles, à savoir les noms des jours de la semaine ou leurs abréviations pour la durée du traitement. Ces plaquettes calendaires, qui sont essentiellement utilisées pour la présentation des "pilules contraceptives" contenant des stéroïdes oraux anticonceptionnels, ne conviennent pas pour les traitements dont la durée ne correspond pas à un multiple entier de la semaine.

En effet, par sécurité et économie on ne va pas commercialiser, pour un traitement comprenant la prise d'un comprimé par jour pendant 30 jours, des plaquettes calendaires du type sus-visé comportant 35 comprimés répartis chacun dans une alvéole à laquelle est associé le nom d'un jour de la semaine.

Par ailleurs ces plaquettes calendaires ne s'appliquent qu'à un nombre restreint de formes pharmaceutiques, à savoir essentiellement les formes orales solides telles que comprimés, gélules et pilules.

Enfin elles n'assurent pas efficacement, suivant l'expression de l'homme de métier, une "aide à l'observance" du traitement thérapeutique, des lors que (i) l'ouverture d'une alvéole portant une indication calendaire par déchirure de la membrane protectrice et (ii) le prélèvement du contenu (dans le cas d'espèce, le comprimé, la gélule ou la pilule) de ladite alvéole, peuvent ne pas correspondre à une administration effective du médicament. Une telle circonstance malheureuse peut notamment se présenter quand le patient remplit son pilulier le matin et oublie une des prises de la journée.

Suivant l'invention on préconise une nouvelle solution technique pour résoudre le problème de "l'aide à l'observance" d'un traitement thérapeutique, qui permet de pallier les difficultés sus-visées et qui a l'avantage d'être applicable, non seulement aux formes orales solides, mais encore à l'ensemble des formes galéniques quels que soient leur conditionnement et leur mode d'administration. En bref la solution technique qui est préconisée convient pour les formes orales solides et pour les autres formes, notamment les formes orales liquides telles que les sirops et ampoules buvables, et, les formes dermatologiques telles que les pommades, onguents, laits et lotions.

Par rapport à l'art antérieur décrit ci-dessus, la solution suivant l'invention se distingue en particulier par la séparation des deux opérations importantes que sont le prélèvement de la dose de son support ou véhicule (plaquette sous blister, flacon, tube, etc.), d'une part, et l'administration effective de ladite dose, d'autre part.

On propose donc suivant l'invention un calendrier posologique permettant d'apporter une aide à la réussite et au suivi d'un traitement thérapeutique par la confirmation de l'administration effective d'un médicament et le respect dans le temps de la posologie prescrite, ledit calendrier, qui comporte des indications calendaires étant caractérisé en ce que

a) il comprend au moins deux series d'indications calendaires, la première série étant constituée par la suite chronologique de tous les éléments unitaires d'un groupe temporel, lesdits éléments étant choisis en fonction de la périodicité de prise de la dose unitaire de médicament suivant une échelle comprenant

(i) les numéros des jours, lorsque le groupe temporel est le mois,

(ii) les noms des jours ou leurs abréviations, lorsque le groupe temporel est la semaine, et

(iii) les fractions ou portions de jour, lorsque le groupe temporel est la journée, la semaine ou le mois,

la seconde série étant constituée par la suite chronologique de tous les éléments unitaires d'un groupe temporel de nature hebdomadaire suivant une échelle de base sept, le nombre d'éléments unitaires dudit groupe ayant pour valeur sept ou un multiple entier de sept et étant égal ou directement supérieur au nombre total de doses unitaires de médicament devant être administrées selon que celui-ci est divisible ou non par sept,

b) les indications calendaires d'au moins une des deux dites séries comportent chacune une marque de reconnaissance modifiable par l'utilisateur au cours du traitement,

c) lesdites deux séries d'indications calendaires étant associées et coopérant de telle façon que la lecture visuelle ou manuelle dudit calendrier posologique précise, durant le traitement, grâce aux marques de reconnaissance, le début du traitement, la dernière dose unitaire administrée et la dose unitaire suivante à prendre.

En bref le calendrier posologique suivant l'invention comporte deux échelles de temps, une première échelle ayant pour unité le jour dans le mois ou la semaine, ou encore une portion de jour dans le jour, la semaine ou le mois, et une seconde échelle de nature hebdomadaire de base sept ou multiple entier de sept.

Ces deux échelles, qui peuvent être permutables et qui peuvent en outre comporter des éléments unitaires communs, permettent grâce aux marques ou signes de reconnaissance de repérer trois instants : le début du traitement, l'instant de la dernière prise, l'instant de la prise suivante.

La marque ou le signe de reconnaissance préférée selon l'invention est détectable tant visuellement qu'au toucher, de sorte que les non-voyants puissent utiliser sans difficulté le présent calendrier posologique. Une telle marque de reconnaissance est avantageusement une couche d'encre grattable disposée suivant une zone appropriée conformément à au moins une des deux échelles de temps. L'élimination d'une couche d'encre par grattage est repérable, d'une part, par une différence de coloration de la zone sous-jacente, et d'autre part, par une différence d'épaisseur au toucher.

Le calendrier posologique suivant l'invention est particulièrement intéressant pour les cycles de traitement comprenant une période d'administration d'un médicament suivie d'une période de repos sans administration.

La dose unitaire de medicament sus-visée est ici la plus faible dose administrable telle que recommandée par le fabricant. De façon avantageuse la dose unitaire correspondra à la dose quotidienne à administrer telle que préparée ou recommandée par ledit fabricant.

D'autres avantages et caractéristiques de l'invention seront mieux compris à la lecture de la description qui va suivre d'exemples de réalisation nullement limitatifs mais donnés à titre d'illustration, par référence aux dessins annexés dans lesquels :

- la figure 1 représente schématiquement un calendrier suivant l'invention destiné à une posologie comprenant une dose unitaire quotidienne pendant trente jours ;

- la figure 2 représente un autre calendrier suivant l'invention destiné à une posologie comprenant une dose unitaire quotidienne pendant deux semaines ;

- la figure 3 représente un autre calendrier suivant l'invention destiné à une posologie comprenant plusieurs cycles successifs avec dans chaque cycle une période d'administration suivie d'une période de repos ; et

- la figure 4 représente un autre mode de réalisation d'un calendrier posologique pour une posologie comprenant plusieurs cycles successifs comme dans la figure 3.

Le calendrier posologique suivant l'invention référencé 1 se présente soit sous la forme d'une carte placée à l'intérieur de la boîte de conditionnement, soit sous la forme d'un imprimé apposé sur une des faces externes de la boîte de conditionnement, soit encore sous la forme d'une étiquette auto-adhésive détachable destinée à être collée sur la boite de conditionnement. De façon avantageuse on peut prévoir que la boîte de conditionnement comprenne simultanément ladite carte et ledit imprimé sur l'une de ses faces, la carte pouvant alors être emportée par le patient lors de ses déplacements.

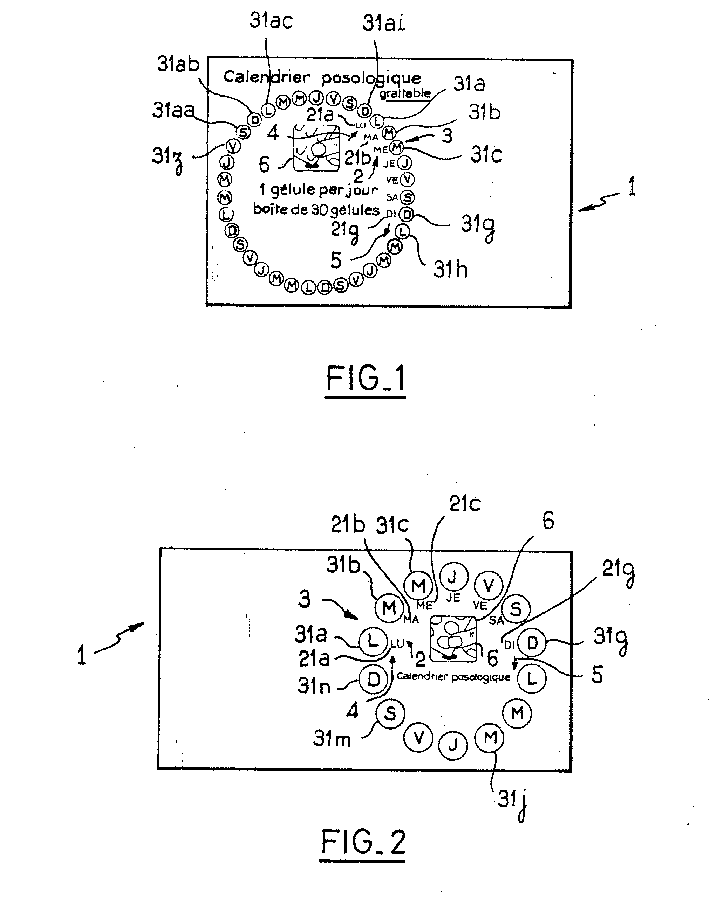

Le calendrier posologique 1 comporte une première série 2 d'indications calendaires 21a, 21b ... 21g dans le cas d'espèce les sept jours de la semaine et une seconde série 3 d'indications calendaires 31a, 31b, etc. (trente-cinq indications suivant la figure 1 numérotées 31a à 31ai, quatorze indications suivant les figures 2-5 numérotées 31a à 31n). Le nombre N d'indications de la seconde série correspond au nombre total D de doses unitaires contenues dans la boîte de conditionnement si D est divisible par sept, ou est égal à sept ou au multiple de sept directement supérieur à sept si D n'est pas divisible par sept.

En pratique N aura pour valeur 7, 14, 21, 28 ou 35. Dans le cas d'espèce de la figure 1, le nombre total D de doses unitaires étant de 30 (1 gélule par jour pendant 30 jours), le nombre N est 35.

De façon avantageuse l'une au moins des deux séries calendaires 2 et 3 se présente sous la forme d'une couronne, dans le cas d'espèce la série 3. Les indications 31a, 31b, etc. de ladite série sont des pastilles d'encre grattables, la portion de surface du calendrier 1 située sous ladite pastille ayant une couleur différente de celle de la couche d'encre grattable. L'épaisseur de ladite couche d'encre grattable est détectable au toucher. Une indication calendaire peut apparaître sur le sommet de la couche de chaque pastille ou encore sous ladite couche. De façon pratique l'indication calendaire peut être mise "en réserve" c'est-à-dire qu'elle est située sur le calendrier 1 dans la zone sous-jacente de la pastille d'encre grattable mais non revêtue d'une couche d'encre, circonstance la rendant visible avant grattage.

L'utilisateur gratte au début du traitement l'une des pastilles d'encre grattable 31a, 31b ... 31g située en regard de l'indication calendaire 21a, 21b ... 21g correspondant au jour de la semaine à partir de la flèche 4, puis gratte l'indication calendaire de la série 3 qui suit suivant le sens de la flèche 5 lors de l'administration de la dose unitaire suivante, cette même opération étant effectuée jusqu'à épuisement des doses unitaires de la boîte de conditionnement.

Le calendrier 1 suivant l'invention peut également comporter un mode d'utilisation schématique dans un cartouche 6.

La figure 2 représente un calendrier posologique relatif à un traitement comprenant 1 dose unitaire quotidienne pendant 2 semaines et est utilisé comme indiqué ci-dessus.

Un calendrier analogue à celui de la figure 2 peut être utile pour un traitement comprenant une dose unitaire matin et soir pendant une semaine. Dans ce cas, les indications calendaires 21a et 21b concerneraient par exemple le matin et le soir d'un même jour de la semaine, et, les indications calendaires 31a et 31b pourraient être représentées par L1 et L2 pour désigner respectivement les première et seconde prises du lundi.

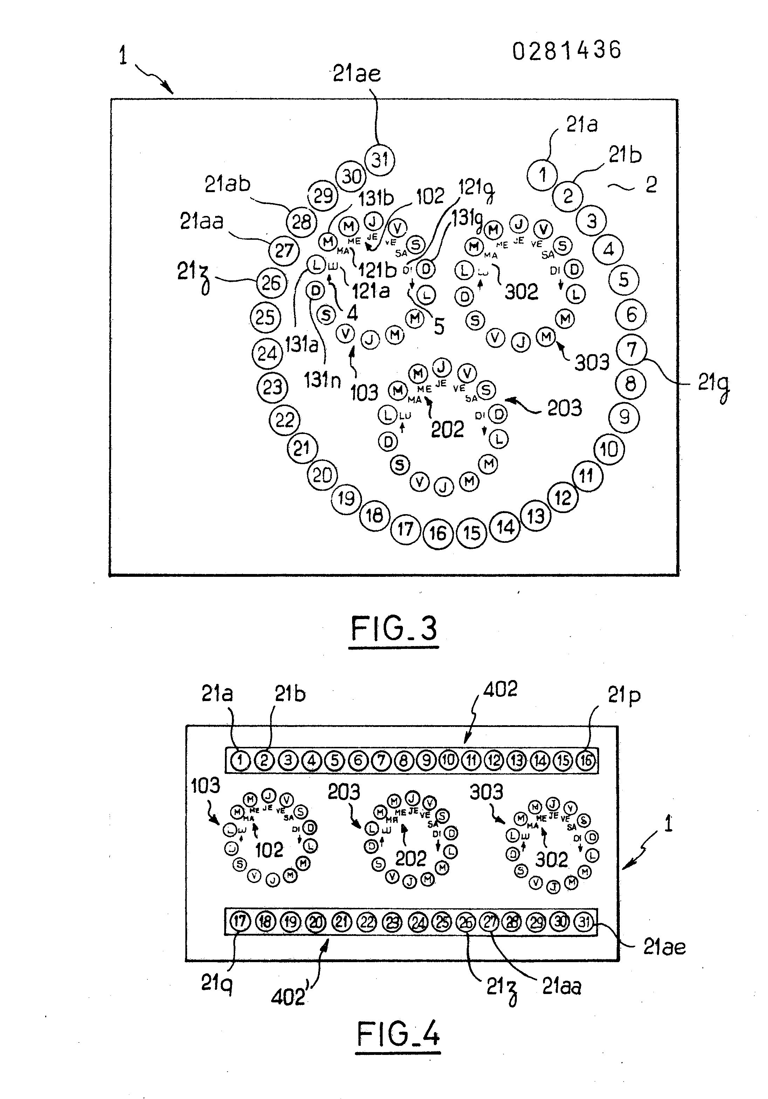

Le calendrier de la figure 3 est destiné à une posologie comprenant 3 cycles successifs, chaque cycle comporte, par exemple, l'administration d'une dose unitaire quotidienne pendant 10 jours puis une période de repos de 20-21 jours sans administration. Le premier jour du traitement le patient gratte la pastille 21a-21b ... 21ae correspondant au numéro du jour dans le mois et une des pastilles 131a à 131g de la série 103 située en regard de la série 102 puis gratte chaque jour la pastille qui suit pendant les 10 jours d'administration. Il recommence le traitement cyclique le jour du mois suivant ayant le même numéro que celui du premier cycle et gratte les pastilles de la série 203 homologues de celles de la série 103 en s'aidant pour le début des indications de la serie 202 au fur et à mesure des prises quotidiennes pendant 10 jours. Après repos de 20-21 jours, le troisième cycle se déroule comme les deux premiers avec grattage des pastilles de la série 303 en s'aidant au début des indications de la série 302. En bref, un tel calendrier comporte, pour un traitement administration-repos, au moins une première série 2 d'indications calendaire et un couple constitué d'une nouvelle première série 102 d'indications calendaires 121a, 121b... et d'une seconde série 103 d'indications calendaires 131a, 131b .., à raison d'un couple 102,103 par cycle posologique comprenant une période d'administration et une période de repos sans administration.

Le calendrier posologique de la figure 4 est analogue à celui de la figure 3, la série 402, 402' correspond à la série 2 de la figure 3 n'étant plus disposée sous forme de couronne mais suivant deux bandes rectangulaires.

En variante on peut prévoir pour une posologie analogue à celle des figures 3 et 4 le remplacement des séries 2 et 402-402' par un cartouche dans laquelle le patient inscrirait la date du début du traitement.

## Revendications

1. Calendrier posologique permettant d'apporter une aide à la réussite et au suivi d'un traitement thérapeutique par la confirmation de l'administration effective d'un médicament et le respect dans le temps de la posologie prescrite, ledit calendrier, qui contient des indications calendaires, étant caractérisé en ce que

a) il comprend au moins deux séries d'indications calendaires, la première série (2) étant constituée par la suite chronologique de tous les éléments unitaires (21a, 21b ...) d'un groupe temporel, lesdits éléments (21a, 21b ...) étant choisis en fonction de la périodicité de prise de la dose unitaire de médicament suivant une échelle comprenant

(i) les numéros des jours, lorsque le groupe temporel est le mois,

(ii) les noms des jours ou leurs abréviations, lorsque le groupe temporel est la semaine, et

(iii) les fractions ou portions de jour, lorsque le groupe temporel est la journée, la semaine ou le mois,

la seconde série (3) étant constituée par la suite chronologique de tous les éléments unitaires (31a, 31b ...) d'un groupe temporel de nature hebdomadaire suivant une échelle de base sept, le nombre d'éléments unitaires dudit groupe ayant pour valeur sept ou un multiple entier de sept et étant égal ou directement supérieur au nombre total de doses unitaires de médicament devant être administrées selon que celui-ci est divisible ou non par sept,

b) les indications calendaires d'au moins une des deux dites séries (2, 3) comportent chacune une marque de reconnaissance modifiable par l'utilisateur au cours du traitement,

c) lesdites deux séries (2, 3) d'indications calendaires étant associées et coopérant de telle façon que la lecture visuelle ou manuelle dudit calendrier posologique précise, durant le traitement, grâce aux marques de reconnaissance, le début du traitement, la dernière dose unitaire administrée et la dose unitaire suivante à prendre.

2. Calendrier posologique suivant la revendication 1, caractérisé en ce qu'au moins une des séries d'indications calendaires (2, 3) est disposée en couronne.

3. Calendrier posologique suivant la revendication 1, caractérisé en ce que la marque de reconnaissance est détectable visuellement et au toucher.

4. Calendrier posologique suivant la revendication 3, caractérisé en ce que la marque de reconnaissance est une couche d'encre grattable (31a, 31b ...).

5. Calendrier posologique suivant la revendication 4, caractérisé en ce que la couche d'encre grattable est une pastille recouvrant une zone sousjacente située autour d'un élément (31a, 31b ...) sans recouvrir ledit élément.

6. Calendrier suivant la revendication 1, caractérisé en ce qu'il comporte au moins une première série (2) d'indications calendaires et un couple constitué d'une nouvelle première série (102) d'indications calendaires (121a, 121b ...) et d'une seconde série (103) d'indications calendaires (131a, 131b...), à raison d'un couple (102-103) par cycle posologique comprenant une période d'administration et une période de repos sans administration.

7. Calendrier suivant l'une quelconque des revendications 1 à 6, caracterisé en ce que la dose unitaire est quotidienne et en ce que la série (2) d'indications calendaires (21a, 21b ... 21g) comporte comme éléments unitaires la suite des noms des sept jours de la semaine ou leurs abréviations, le groupe temporel étant la semaine.

0281436

## FIG_1

## FIG_2

0281436

FIG.3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 057 473 (R. STEIN) <br> * Colonne 2, lignes 43-56; figures 1,2 * <br> --- | 1,7 | |
| A | US-A-3 757 441 (M. BAUSTIN) <br> * Colonnes 1,2; figure * <br> --- | 1,4,5-7 | |
| A | GB-A-2 079 250 (BEECHAM PHARMACEUTICALS) <br> --- | 1 | |
| A | US-A-3 964 196 (L. URETA) <br> --- | | |
| A | FR-A-1 521 611 (. TISNE) <br> ----- | | |

DOMAINES TECHNIQUES
RECHERCHES (Int. Cl.4)

G 09 B
G 09 F
A 61 J
G 09 D

Le présent rapport a été établi pour toutes les revendications

| Lieu de la recherche | Date d'achèvement de la recherche | Examinateur |
|---|---|---|
| LA HAYE | 21-05-1988 | ODGERS M.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0401)